# EUROPEAN PATENT SPECIFICATION

(11) **EP 0 437 497 B1**
(45) Date of publication and mention of the grant of the patent: **04.05.1994**
(21) Application number: 89911507.5
(22) Date of filing: 04.10.1989
(51) Int. Cl.: G03B 5/00, G03B 19/07, G03B 13/02

(54) **CAMERA VIEW FINDER**
SUCHER EINER KAMERA
VISEUR POUR APPAREIL PHOTOGRAPHIQUE

(30) Priority: 07.10.1988 US 255091
(43) Date of publication of application: 24.07.1991
(73) Proprietor: EASTMAN KODAK COMPANY, Rochester, New York 14650-2201 (US)
(72) Inventor: GATES, Richard, Allen, Hilton, NY 14468 (US)
(74) Representative: Blickle, K. Werner, Dipl.-Ing.
(86) International application number: US8904342
(87) International publication number: WO9004197

(56) References cited:
- WO-A-87/00305
- DE-A- 2 558 276
- GB-A-21 522 29
- US-A- 3 124 682
- US-A- 4 264 175
- US-E- 0 030 231

## Description

### TECHNICAL FIELD

The present invention relates to view finder devices for use in cameras and more particularly to an improved view finder device in which a plurality of lenses can be selectively positioned in a viewing position or optical path.

### BACKGROUND ART

Mechanisms are know which change the magnification of a view finder in cameras having more than one photographic lens and in cameras for producing special effects such as pseudo tele or pseudo pan. However, in general, such mechanisms are complicated and capable of providing only two levels of magnification.

The patent US-E-0 030 231 shows a device for placing any one of three or more lenses in an optical path. The lenses are shifted between retracted and operative positions by a plurality of drive means, each being coupled to a respective lens assembly and there being one less drive means than there are lens assemblies. Follower means engaging that lens assembly which is not coupled to position it in the optical path.

Our copending application No. 89 118 645.4, published under EP-A-0 363 851 discloses a camera view finder which comprises three separate lenses for producing images corresponding to desired effects. The lenses are mounted on parallel frames which are supported for rectilinear movement. A slidably mounted plate, for rectilinear movement, is provided with two slots for positioning the lense frames.

### DISCLOSURE OF THE INVENTION

It is an object of the present invention to provide a compact view finder which can provide three levels of magnification.

This object is solved by an apparatus as defined in claim 1.

### BRIEF DESCRIPTION OF THE DRAWINGS

Other objects and advantages will become apparent from the following description taken in connection with the accompanying drawings wherein:
FIG. 1 is a partially exploded perspective view of a first embodiment of a view finder in accordance with the invention; and
FIGS. 2 and 3 are views similar to FIG. 1 showing the parts in other positions.

### BEST MODE FOR CARRYING OUT THE INVENTION

Referring to the drawings, there is shown a view finder device for a photographic camera. To simplify the disclosure, camera parts not necessary for an understanding of the invention have been omitted. For example, the eye lens and front element are not shown and the disclosure is limited to apparatus for moving the movable lens element.

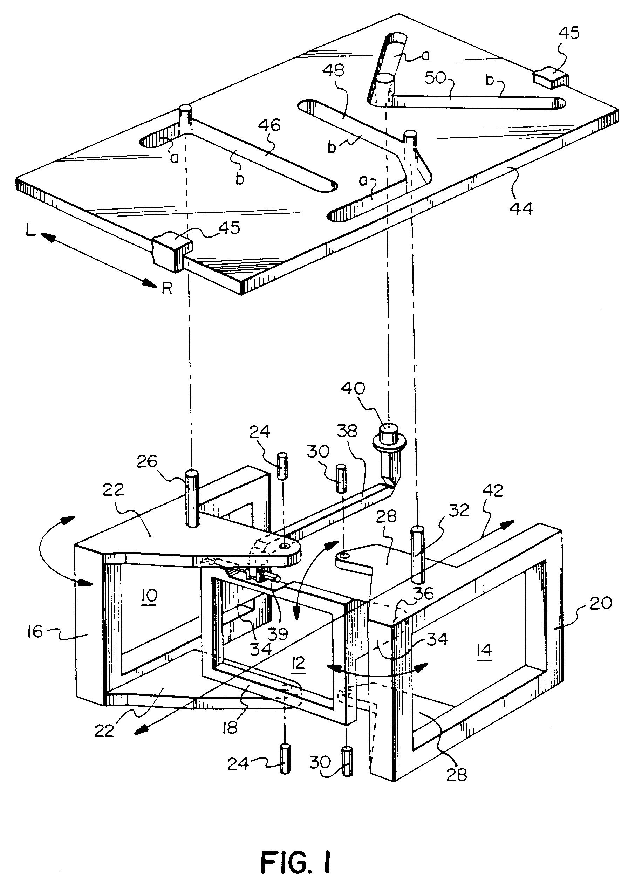

Referring to FIG. 1 of the drawings, there is shown a view finder comprising three lenses 10, 12 and 14 mounted in frames 16, 18 and 20 respectively. In a typical pseudo tele pan camera lens 10 might be the normal view finder lens. Lens 12 might be used to provide magnification of the scene in the view finder for pseudo tele purposes and lens 20 might be used to provide panoramic views for pseudo pan purposes.

Frame 16 is of rectangular configuration and comprises a pair of flanges 22 extending from one side thereof which are pivotaly mounted on pins 24 fixed to the camera body (not shown). A third pin 26 extends from the upper flange 22 and functions as a cam pin for pivoting the frame about the axis of pins 24 as will later be described in more detail.

Frame 20, positioned in spaced parallel relationship with frame 16, is similar in configuration to frame 16 and includes a pair of flanges 28 pivotally mounted on a pair of pins 30 fixed to the camera body. A cam pin 32 extends upward from the upper flange 28 and provides a means for pivoting the frame 16 about the axis of pins 30, an axis parallel to the axis of pins 24.

The third frame 18, positioned in perpendicular relationship with frames 16 and 20, is also similarly configured and provided with a pair of spaced flanges 34 pivotally mounted on a pair of pins 36 fixed to the camera body. The frame 18 is positioned between the flanges 22 and 28 and pivots about the horizontal axis of pins 36 which axis is perpendicular to that of pins 24 and that of pins 30. An elongated cam arm 38 extending perpendicularly from the plane of frame 18 and pivotally connected to frame 18 by pin 39 is provided with an upwardly extending pin 40 at its end to provide a means for pivoting the frame 18 about the axis of pins 36. In the position of the parts shown in FIG. 1, the lens 12 is positioned in the sight plane 42 and is the operative lens.

To position the lenses, a cam plate 44 is positioned over the frame assemblage and suitably supported in guides 45 for rectilinear reciprocal movement in the direction of the arrow. The cam plate 44 is provided with three slots 46, 48 and 50. Pin 26 of frame 16 is received by slot 46, pin 40 of frame 18 by slot 50 and pin 32 of frame 20 by slot 48. Movement of the plate 44 to the right and left from the position shown in FIG. 1 will position the frame 18 out of the optical path and position one of the frames into the optical path depending upon the direction of movement as will now be described.

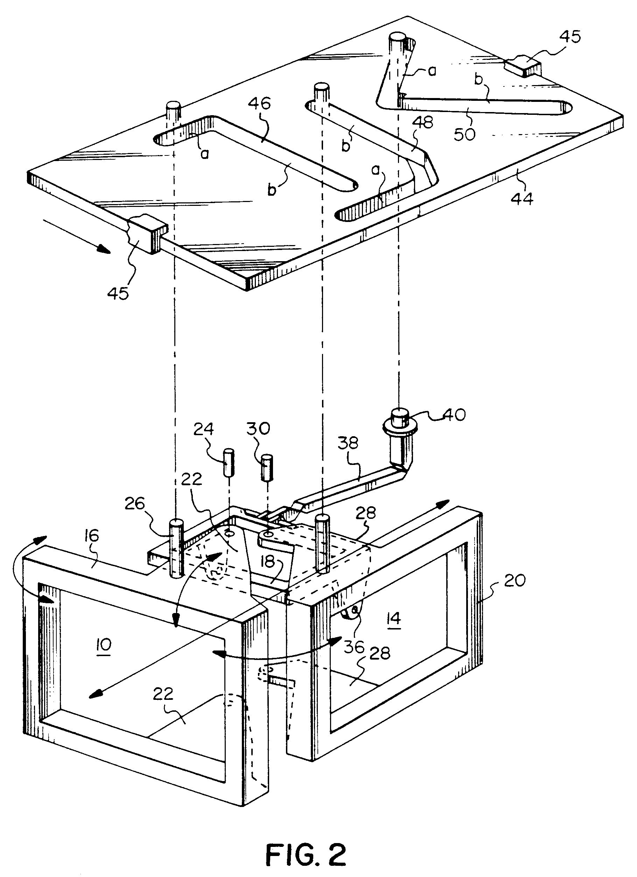

If plate 44 is moved to the right (R) portion (a) of slot 46 will cam pin 26 and cause frame 16 to pivot counterclockwise to the position shown in FIG. 2. Simultaneously portion (a) of slot 50 will cam pin 40 and cause frame 18 to pivot upward to the position shown in FIG. 2. Frame 16 is thus positioned in the optical path and frame 18 is moved out of it. During this movement, pin 32 will ride in the straight portion (b) of slot 48 and no movement of frame 20 will occur.

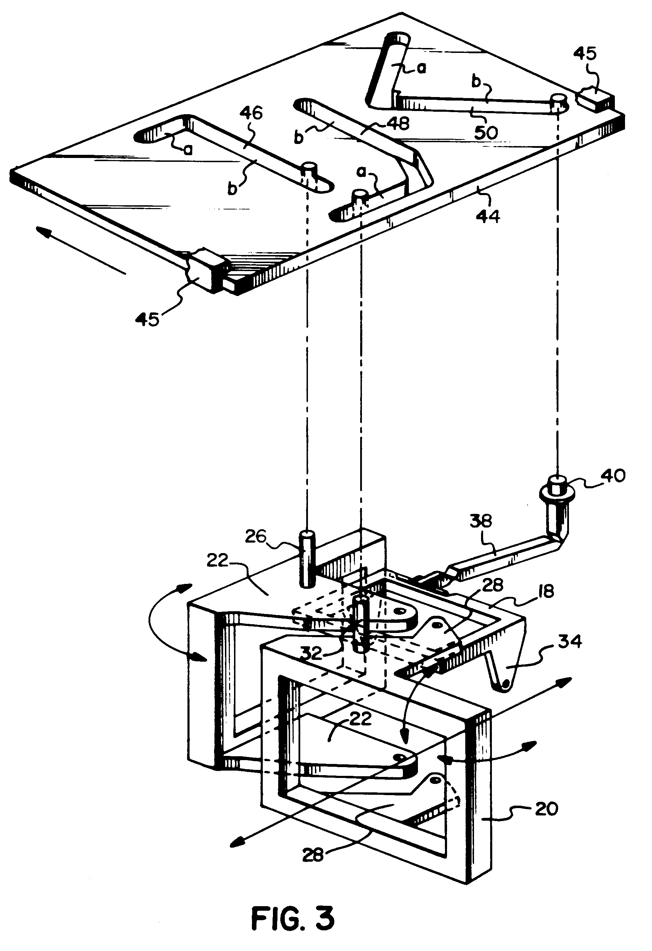

If the cam plate 44 is moved to the left from the position shown in FIG. 1, pin 40 will be cammed by portion (b) of slot 50 to again pivot frame 18 out of the optical path. In this case, however, pin 26 will ride in the straight portion (b) of slot 46 and no movement of frame 16 will occur. However, pin 32 of frame 20 will be cammed by portion (a) of slot 48 to position frame 20 in the optical path as shown in FIG. 3.

The disclosed view finder device thus constitutes a simple compact device for selectively positioning at least three lenses in a optical path.

While the invention has been particularly shown and described with reference to a preferred embodiment thereof, it will be understood by those skilled in the art that various changes may be made without departing from the scope of the invention as defined by the appended claims.

## Claims

1. Apparatus for selectively positioning one of three lenses (10, 12, 14) into an optical path, said apparatus comprising:
first, second and third lens frames (16, 18, 20), each frame being arranged to support a lens and being mounted for movement between a respective first position, wherein the lens frame is positioned out of said optical path, and a respective second position where said lens frame is positioned in said optical path, the frames (16, 18, 20) being mounted in such a manner that, when placed in their second positions, they lie in planes which are substantially parallel to one another; and
means (26, 32, 40, 44) for selectively moving said lens frames (16, 18, 20) between their first and second positions, such that only one frame can ever be in its second position;
said apparatus being characterized in that:
each of said frames (16, 18, 20) is mounted for pivotal movement about an axis extending parallel to the plane of the frame, between said frame first and second position, the pivotal axis of said first (16) and second (20) frames being parallel to each other and perpendicular to the pivotal axis of said third frame (18); and in that
said means for moving said lens frames comprises first (26), second (32) and third (40) cam elements which are connected to said first (16) second (20) and third (18) frames respectively, and a further translatable cam element (44) having guiding slots simultaneously engaging said first (26), second (32) and third (40) cam elements in such a manner that the position of said translatable cam element determines the position occupied by said lens frames.

2. Apparatus as claimed in claim 1, characterized in that said first (26) and second (32) cam elements comprise a cam pin extending directly from said frist (16) and second (20) frame respectively, and said third cam element (40) comprises a cam arm (38) having a cam pin at one end and being pivotally connected at the other end to said third frame (18).

3. Apparatus as claimed in Claim 1 or 2 characterized in that said translatable cam element (44) comprises a plate having three guiding slots (46, 48, 50) each of which engages one of said first, second and third cam elements.

4. Apparatus as claimed in Claim 3 wherein said plate (44) is moveable between a central position, wherein said third frame (18) is in said optical path, and in a first direction to a second position, wherein said second frame (20) is in said optical path, and in a second direction away from said central position, wherein said first frame (16) is in said optical path.

5. Apparatus as claimed in Claim 4 wherein when said first and second frames (16, 20) are in their first positions they are parallel to each other and said third frame (18) is positioned between them in perpendicular relationship therewith.

## Patentansprüche

1. Vorrichtung zur selektiven Anordnung einer von drei Linsen (10, 12, 14) in einem optischen Strahlengang mit
einem ersten, einem zweiten und einem dritten jeweils eine Linse tragenden Linsenhalter (16, 18, 20), von denen jeder zwischen einer ersten Stellung, in der er sich außerhalb des optischen Strahlengangs befindet, und einer entsprechenden zweiten Stellung, in der er sich im optischen Strahlengang befindet, bewegbar ist, wobei die Linsenhalter (16, 18, 20) derart gelagert sind, daß sie in ihrer zweiten Stellung in im wesentlichen parallel zueinander verlaufenden Ebenen angeordnet sind, und mit
Mitteln (26, 32, 40, 44), welche die Linsenhalter (16, 18, 20) selektiv derart zwischen ihrer ersten und zweiten Stellung bewegen, daß sich immer nur ein Linsenhalter in seiner zweiten Stellung befindet, **dadurch gekennzeichnet,**
daß jeder der Linsenhalter (16, 18, 20) um eine parallel zur Ebene des Linsenhalters verlaufende Achse zwischen der ersten und der zweiten Stellung schwenkbar gelagert ist, wobei die Schwenkachsen des ersten Linsenhalters (16) und des zweiten Linsenhalters (20) parallel zueinander und senkrecht zur Schwenkachse des dritten Linsenhalters (18) verlaufen, und
daß die Mittel zum Bewegen der Linsenhalter ein erstes (26), zweites (32), und drittes (40) Nockenelement umfassen, das jeweils mit dem ersten bzw. zweiten bzw. dritten Linsenhalter (16 bzw. 20 bzw. 18) verbunden ist, und daß ein translatorisch wirkendes Steuerelement (44) vorgesehen ist, das Führungsschlitze enthält, die gleichzeitig so an dem ersten (26), zweiten (32) und dritten (40) Nockenelement angreifen, daß die Stellung des Steuerelements die von den Linsenhaltern eingenommene Stellung bestimmt.

2. Vorrichtung nach Anspruch 1, dadurch gekennzeichnet, daß das erste Nockenelement (26) und das zweite Nockenelement (32) jeweils einen Nockenstift aufweisen, der direkt aus dem ersten bzw. zweiten Linsenhalter (16 bzw. 20) herausragt, und daß das dritte Nockenelement (40) einen Arm (38) besitzt, an dessen einem Ende ein Nockenstift angeordnet ist und der mit seinem anderen Ende schwenkbar mit dem dritten Linsenhalter (18) verbunden ist.

3. Vorrichtung nach Anspruch 1 oder 2, dadurch gekennzeichnet, daß das Steuerelement (44) aus einer Platte mit drei Führungsschlitzen (46, 48, 50) besteht, die jeweils mit dem ersten bzw. zweiten bzw. dritten Nockenelement in Eingriff stehen.

4. Vorrichtung nach Anspruch 3, dadurch gekennzeichnet, daß die Platte (44) aus einer mittleren Stellung, in der sich der dritte Linsenhalter (18) im optischen Strahlengang befindet, in einer ersten Richtung zu einer zweiten Stellung hin bewegbar ist, in der der zweite Linsenhalter (20) im optischen Strahlengang angeordnet ist, und in einer zweiten Richtung aus der mittleren Stellung heraus derart bewegbar ist, daß sich der erste Linsenhalter (16) im optischen Strahlengang befindet.

5. Vorrichtung nach Anspruch 4, dadurch gekennzeichnet, daß der erste und der zweite Linsenhalter (16, 20) in ihrer ersten Stellung parallel zueinander angeordnet sind und daß der dritte Linsenhalter (18) zwischen ihnen senkrecht verlaufend angeordnet ist.

## Revendications

1. Dispositif pour disposer à volonté l'une de trois lentilles (10, 12, 14) sur un trajet optique, dispositif comprenant :
un premier, un second et un troisième barillet (16, 18, 20), chacun étant agencé pour supporter une lentille et étant monté de manière à se déplacer entre une première position dans laquelle le barillet est situé hors du trajet optique et une seconde position dans laquelle le barillet est situé sur le trajet optique, les barillets (16, 18, 20) étant montés de manière que, lorsqu'ils occupent leurs secondes positions, ils sont situés dans des plans pratiquement parallèles les uns aux autres, et
des moyens (26, 32, 40, 44) pour déplacer à volonté lesdits barillets (16, 18, 20) entre leur première et leur seconde position de telle sorte que seulement un des barillets puisse être, à un instant donné, placé dans une seconde position ;
ledit dispositif étant caractérisé en ce que :
chaque barillet est monté de manière à pouvoir basculer entre ladite première position et ladite seconde position autour d'un axe parallèle au plan du barillet, les axes de basculement dudit premier barillet (16) et dudit second barillet (20) étant parallèle l'un à l'autre et étant orthogonal à l'axe de basculement dudit troisième barillet (18) ; et
les moyens pour déplacer lesdits barillets comprennent d'une part, des premiers (26), des seconds (32) et des troisièmes (20) éléments de came qui sont reliés respectivement audit premier (16), second (20) et troisième (18) barillet et d'autre part, une autre came (44) mobile par translation et présentant des fentes guides venant en prise simultanément avec lesdits premiers (26), lesdits seconds (32) et lesdits troisièmes éléments de came (40) de manière que la position de ladite autre came (44) mobile par translation détermine la position occupée par lesdits barillets.

2. Dispositif selon la revendication 1, caractérisé en ce que les premiers (26) et les seconds (32) éléments de came comprennent un ergot débordant directement et respectivement le premier (16) et le second (20) barillet et les troisièmes éléments de came (40) comprennent un bras (38) qui est muni d'un ergot à l'une de ses extrémités et qui est articulé à l'autre extrémité sur ledit troisième barillet (18).

3. Dispositif selon la revendication 1 ou 2, caractérisé en ce que ladite autre came mobile par translation comprend une plaque munie de trois fentes guides (46, 48, 50), chacune étant en prise avec l'un des premiers, seconds et troisièmes éléments de came.

4. Dispositif selon la revendication 3, dans lequel ladite plaque (44) est mobile, à partir d'une position médiane dans laquelle le troisième barillet (18) est disposé sur le trajet optique, dans une première direction vers une seconde position dans laquelle ledit second barillet (20) est disposé sur le trajet optique ou dans une seconde direction, éloignée de la position médiane, dans laquelle ledit premier barillet (16) est disposé sur le trajet optique.

5. Dispositif selon la revendication 4, dans laquelle, lorsque les premier et second barillets (16, 20) sont dans leur première position, ils sont parallèles entre eux et ledit troisième barillet (18) est située entre eux dans un plan orthogonal aux plan des premier et second barillet.
